# EUROPÄISCHE PATENTSCHRIFT

(11) **EP 0 387 972 B1**
(45) Veröffentlichungstag und Bekanntmachung des Hinweises auf die Patenterteilung: **26.01.1994**
(21) Anmeldenummer: 90250059.4
(22) Anmeldetag: 27.02.1990
(51) Int. Cl.: G07F 7/08, G07F 9/02, G07F 9/08

(54) **Verfahren zum Betrieb eines Automaten**
Vending machine controlling method
Méthode de commande d'un automate

(30) Priorität: 17.03.1989 DE 3909323
(43) Veröffentlichungstag der Anmeldung: 19.09.1990
(73) Patentinhaber: Klüssendorf Aktiengesellschaft, D-13599 Berlin (DE)
(72) Erfinder: Krämer, Wilfried,, D-1000 Berlin 19 (DE)
(74) Vertreter: Pfenning, Meinig & Partner

(56) Entgegenhaltungen:
- WO-A-88/01818
- DE-A- 3 435 697
- DE-A- 3 802 186
- GB-A- 2 083 259
- GB-A- 2 140 953
- GB-A- 2 143 662
- US-A- 4 512 453
- US-A- 4 654 800

## Beschreibung

Die Erfindung betrifft ein Verfahren nach dem Oberbegriff des Anspruchs 1.

Die Bedienung und Wartung von herkömmlichen Automaten ist relativ umständlich und zeitaufwendig. Bei Fahrschein- oder anderen Wertmarkenautomaten beispielsweise sind durch Tarifänderungen häufig Umstellungen vorzunehmen, die bei jedem Automaten individuell und sehr zeitraubend durchgeführt werden müssen. Die Abrechnung des vereinnahmten Geldes erfolgt in der Weise, daß ein verschlossener Geldbehälter im Automaten ausgewechselt und das im entnommenen Behälter befindliche Geld gezählt wird. Hierbei ist eine Kontrolle der Ordnungsmäßigkeit der Geldeinnahme nicht möglich. Weiterhin ist es bei Auftreten einer Störung oft schwierig, den Fehler am Ort des Automaten festzustellen, so daß dieser in eine Reparaturwerkstatt gebracht werden muß, obwohl er am Aufstellort hätte repariert werden können. Auch werden bei einer derartigen Reparatur nur die aktuellen Fehler beseitigt, ohne nach deren Ursache zu forschen, so daß mit dem erneuten Auftreten eines Fehlers bereits nach kurzer Zeit gerechnet werden muß. Schließlich besteht auch grundsätzlich die Gefahr von Manipulationen der Automaten durch das Bedienungs- und/oder Wartungspersonal zum Nachteil der Kunden oder des Aufstellers.

Aus der GB-A-2 140 953 ist bereits ein gegen Annahme von Geld oder geldgleichen Werten Leistungen erbringender oder Gegenstände ausgebender Automat mit einer einen Speicher enthaltenden elektronischen Steuereinheit und einer Schreib- und Lesevorrichtung bekannt. Durch kartenförmige Aufzeichnungsträger wird der Automat zur Ausgabe von gegenwärtigen oder in der Vergangenheit aufgezeichneten Betriebszuständen entsprechenden Daten freigegeben oder unmittelbar veranlaßt. Weiterhin enthält der Automat auch mehrere Detektoren zur Überwachung des ordnungsgemäßen Ablaufs während verschiedener Betriebszustände und zur Anzeige eines Fehlverhaltens. Derartige Fehler können auch aufgezeichnet werden.

Aus der DE 34 35 697 A1 ist darüber hinaus ein elektrisches Gerät, beispielsweise ein Gebührenzähler bekannt, dessen in einem internen Speicher registrierte Funktionsmerkmale geändert werden können. Hierzu wird eine festprogrammierte Speicherkarte in das Gerät eingeführt und in diesem abgetastet. Die von der Karte abgetasteten Daten werden in den internen Speicher eingeschrieben. Durch Verwendung unterschiedlich programmierter Speicherkarten können wählbare Kombinationen von Funktionsmerkmalen erhalten werden.

Ausgehend von dem aus der GB-A-2 140 953 bekannten Automaten ist es die Aufgabe der vorliegenden Erfindung, diesen so zu verbessern, daß das Auftreten von Störfällen besser erkannt werden kann, so daß erforderliche Reparaturen einfacher durchgeführt werden können und auch die Störanfälligkeit herabgesetzt wird.

Diese Aufgabe wird erfindungsgemäß durch die im kennzeichnenden Teil des Anspruchs 1 angegebenen Merkmale gelöst. Vorteilhafte Weiterbildungen des erfindungsgemäßen Verfahrens ergeben sich aus den Unteransprüchen.

Dadurch, daß solche außergewöhnlichen Betriebszustände aufgezeichnet werden, die auf die bestimmungsgemäße Funktion des Automaten keinen Einfluß hatten, und daß durch die Aufzeichnungsträger direkt oder mittels einer internen Tastatur die Ausgabe der Informationen über eine bestimmte Anzahl der zuletzt aufgezeichneten außergewöhnlichen Betriebszustände veranlaßt wird, werden auch solche Störanfälle erfaßt, die sonst nicht bemerkt worden wären, zum Beispiel kurzzeitige Stromausfälle oder Ausfälle einzelner Aggregate. Man erhält so eine genaue Fehlerhistorie, die möglicherweise Hinweise auf die Ursache einer akuten Störung gibt oder insgesamt allgemeine Schwachpunkte des Automaten erkennen läßt, so daß diese gegebenenfalls durch den Hersteller beseitigt werden können.

Grundsätzlich lassen sich beim Betrieb eines derartigen Automaten drei Arten von kartenförmigen Aufzeichnungsträgern unterscheiden.

Mit einer sogenannten Tarifkarte werden die für den bestimmungsgemäßen Betrieb erforderlichen Daten wie zum Beispiel der geltende Tarif in den Speicher eingelesen.

Bei späteren Änderungen des Tarifs werden durch eine entsprechend geänderte Tarifkarte die Daten neu eingeschrieben. Die Tarifkarte kann auch eine Berechtigung enthalten, mittels einer externen oder internen Tastatur des Automaten das aktuelle Datum und die Uhrzeit einzustellen, damit die jeweils aufzuzeichnenden Vorgänge zeitgenau erfaßt werden können.

Mit einer sogenannten Abrechnungskarte kann die jeweils berechtigte Person bestimmte den bestimmungsgemäßen Betrieb eines Automaten, d.h. insbesondere die die Annahme des Geldes bzw. der geldgleichen Werte und die Ausgabe von Gegenständen bzw. die Erbringung von Leistungen, betreffende Vorgänge an einer im Automaten installierten Anzeigevorrichtung zur Anzeige bringen und/oder entsprechende Daten auf die Abrechnungskarte übertragen und in dieser speichern. Unter Annahme geldgleicher Werte ist auch die Entwertung von auf Magnetkarten oder dergleichen gespeicherten Guthaben zu verstehen.

Die Anzeige kann als Entscheidungshilfe benutzt werden, zum Beispiel kann der Füllstand des Geldbehälters angezeigt werden, und die Bedienungsperson entscheidet hiernach, ob der Geldbehälter ausgewechselt werden muß oder nicht. In der Abrechnungskarte werden alle bestimmungsgemäßen Vorgänge des Automaten aufgezeichnet, so daß diese lückenlos nachvollziehbar sind. Diese Aufzeichnung kann zeitgleich mit dem jeweiligen Vorgang erfolgen oder später durch die Bedienungsperson ausgelöst werden.

Die Abrechnungskarte wird zweckmäßig in einem besonderen Fach am Geldbehälter aufbewahrt. Sie wird von der Bedienungsperson herausgezogen und der Lesevorrichtung im Automaten zugeführt, so daß der Füllstand des Geldbehälters angezeigt werden kann. Soll der Geldbehälter ausgewechselt werden, dann werden - falls dies nicht bereits zeitgleich durchgeführt wurde - die seit dem Einsatz dieses Geldbehälters erfolgten bestimmungsgemäßen Vorgänge im Automaten auf die Abrechnungskarte übertragen und von dieser gespeichert. Diese wird dann wieder in dem Fach an dem nun herausgenommenen Geldbehälter deponiert und zusammen mit diesem zu einer zentralen Abrechnungsstelle transportiert. In den Automaten wird ein neuer Geldbehälter mit einer neuen Abrechnungskarte eingesetzt.

Die dritte Art des Aufzeichnungsträgers ist die sogenannte Servicekarte. Diese wird nur an bestimmte Personen ausgegeben, da sie erhebliche Eingriffe in den Automaten ermöglicht. So erteilt sie die Berechtigung, über eine interne Tastatur einzelne Betriebszustände abzufragen und anzuzeigen und auch verschiedene Einstellungen individuell vorzunehmen, zum Beispiel des Datums und der Uhrzeit sowie der Tarife. Besitzt der Automat ein Druckwerk, dann kann dieses ebenfalls über die interne Tastatur eingestellt werden. Die abzufragenden Betriebszustände betreffen insbesondere die Funktion beweglicher Teile sowie der elektrischen Bauelemente. Tritt ein außergewöhnlicher Betriebszustand auf, insbesondere eine den Betrieb des Automaten beeinträchtigende Störung, dann kann mittels der Servicekarte die Anzeige eines die Art der Störung identifizierenden Störcodes bewirkt werden. Durch eine zusätzliche Abfrage bestimmter Betriebszustände können auch der Umfang und die Ursachen der Störung festgestellt werden. Die Bedienungsperson kann dadurch entscheiden, ob sie den Automaten am Aufstellort reparieren kann oder ob sie den gesamten Automaten oder einzelne Teile von diesem in die Werkstatt bringen muß.

Eine Besonderheit der Servicekarte besteht darin, daß im Automaten jeder einzelne Störfall registriert wird und daß die Informationen über eine vorgegebene Anzahl, beispielsweise 20, der zuletzt aufgetretenen Störungen auf die Servicekarte übertragen und von dieser gespeichert werden. Es handelt sich erfindungsgemäß unter anderem um die genannten Störfälle, die auf die bestimmungsgemäße Funktion des Automaten keinen Einfluß hatten. Die Bedienungsperson kann, wenn die automateninterne Anzeige nicht ausreichend ist, um etwaige Störungen so eindeutig zu identifizieren, daß sie am Aufstellort beseitigt werden können, einen mobilen Kartenleser mit Druckvorrichtung mit sich führen, so daß eine genaue Fehleranalyse bereits am Aufstellort möglich ist.

Im Automaten kann zusätzlich eine weitere Karte aufbewahrt werden, die Angaben zu seiner Identifikation enthält, beispielsweise über seinen Standort, seine Fabrikationsnummer und dergleichen.

Als Aufzeichnungsträger werden vorzugsweise sogenannte Chip-Karten verwendet, d.h. Karten mit einem Mikroprozessor, die in vielfältigster Weise einsetzbar sind.

Die Erfindung wird im folgenden anhand eines in den Figuren dargestellten Ausführungsbeispiels näher erläutert. Es zeigen:
- Fig. 1: die schematische Darstellung der Funktion einer Abrechnungskarte, und
- Fig. 2: die schematische Darstellung der Funktion einer Servicekarte.

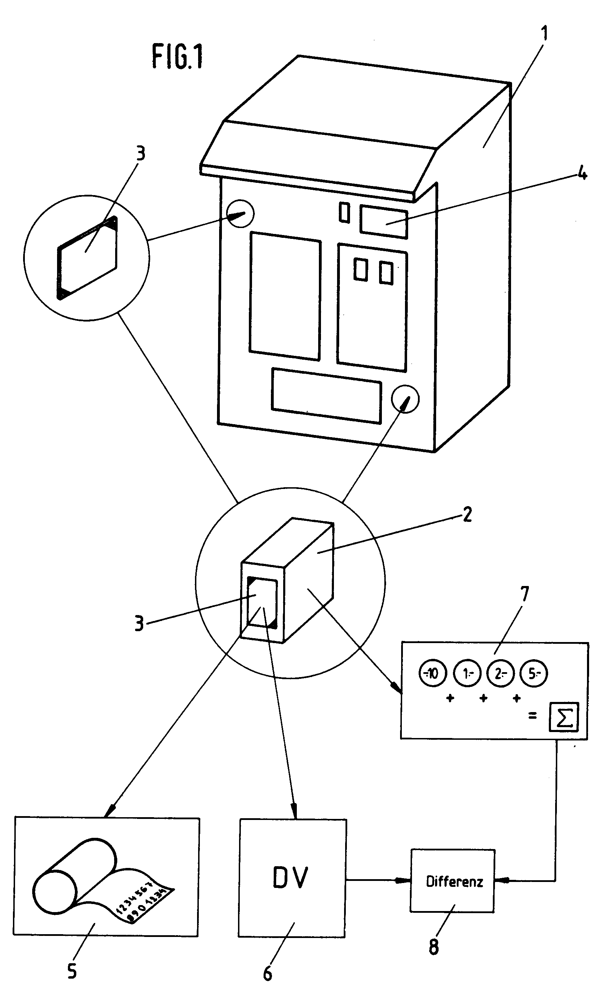

Fig. 1 zeigt einen Automaten 1 beispielsweise zur Ausgabe von Briefmarken oder Fahrkarten. Diese Ausgabe kann durch Eingabe von Geldmünzen oder Banknoten oder auch durch Abbuchung von einem auf einem kartenförmigen Aufzeichnungsträger gespeicherten Guthaben erfolgen. Der Automat 1 enthält einen Mikroprozessor mit einem Speicher sowie einer Schreib- und Lesevorrichtung.

In den Automaten ist ein Geldbehälter 2 eingesetzt, an dem eine Abrechnungskarte 3 in Form einer Chip-Karte befestigt ist.

Jeder Vorgang im bestimmungsgemäßen Betrieb des Automaten, d.h. jede Geldeingabe oder Abbuchung und jede Ausgabe einer Briefmarke oder Fahrkarte wird zusammen mit der entsprechenden Zeitangabe im Automaten registriert. Weiterhin werden besondere Vorgänge wie beispielsweise das Öffnen des Automaten und dergleichen aufgezeichnet.

Wenn der Geldbehälter 2 durch eine berechtigte Person ausgewechselt werden soll, nimmt diese zunächst die Abrechnungskarte 3, wobei der Geldbehälter 2 im Automaten 1 verbleibt, und führt diese in die Schreib- und Lesevorrichtung des Automaten 1 ein. Daraufhin erscheint auf einer Anzeigevorrichtung 4 eine Anzeige über den Füllstand des Geldbehälters 2. Die Bedienungsperson kann daraufhin entscheiden, ob der Geldbehälter 2 ausgewechselt werden soll oder nicht. Soll die Auswechselung erfolgen, dann werden alle während des Einsatzes dieses Geldbehälters 2 registrierten Daten über bestimmungsgemäße Vorgänge auf der Abrechnungskarte 3 gespeichert. Der Geldbehälter 2 wird dann herausgenommen und die Abrechnungskarte 3 wieder an ihm befestigt. Danach wird ein neuer Geldbehälter mit neuer Abrechnungskarte in den Automaten 1 eingesetzt.

Der dem Automaten 1 entnommene Geldbehälter 2 wird zusammen mit der Abrechnungskarte 3 zu einer zentralen Verrechnungsstelle gebracht. Dort können mittels einer Druckvorrichtung 5 die auf der Abrechnungskarte 3 gespeicherten Daten ausgedruckt werden. Weiterhin werden sie zur zweckmäßigen Verarbeitung in eine Datenverarbeitungsanlage 6 eingegeben. Der Inhalt des Geldbehälters 2 wird in einem Geldzähler 7 ermittelt und in einer Vergleichsschaltung 8 kann geprüft werden, ob die tatsächlich vorhandene Geldmenge mit den entsprechenden Daten auf der Abrechnungskarte 3 übereinstimmt. Auf diese Weise ist eine automatische und jederzeit überprüfbare Abrechnung möglich.

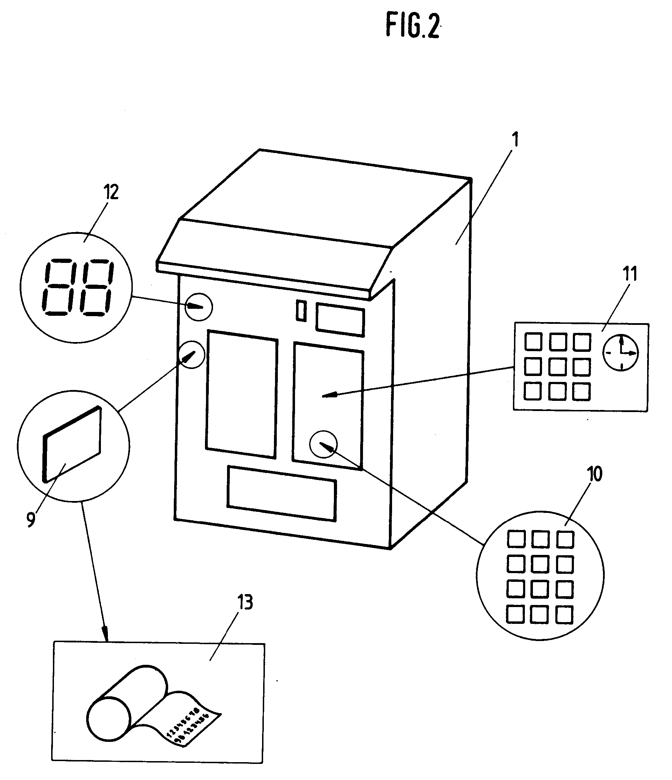

Zur Wartung oder Reparatur des Automaten 1 ist eine Servicekarte 9 gemäß Fig. 2 erforderlich. Diese wird von einer berechtigten Person in die Schreib-/Lesevorrichtung des Automaten 1 eingeführt und veranlaßt die Freigabe einer internen Tastatur 10, die als Zehnertastatur oder mit einzelnen Funktionstasten ausgebildet sein kann und zum Abruf verschiedener im Mikroprozessor des Automaten 1 gespeicherter Programme für die Funktionsprüfung dient. Eine zweite Tastatur 11 zum Einstellen von Zeit und Datum kann dagegen auch von dem Besitzer einer sogenannten Tarifkarte betätigt werden.

Mit der Tastatur 10 kann auf einer Anzeigevorrichtung 12 die Anzeige eines Störcodes veranlaßt werden, der die Ursache einer akuten Störung angibt. Mit Hilfe der Tastatur 10 können alle mechanischen und elektrischen Funktionsteile im Automaten überprüft und das Ergebnis dieser Prüfung mit der Anzeigevorrichtung 12 angezeigt werden. Auf diese Weise kann sich die Bedienungsperson an einen Fehler herantasten und sich von seinem Umfang und gegebenenfalls auch von seinen Ursachen Kenntnis verschaffen.

Im Mikroprozessor des Automaten 1 werden darüber hinaus alle Störfälle registriert, d.h. auch solche, die nur geringfügig oder kurzzeitig sind, so daß sie den bestimmungsgemäßen Betrieb des Automaten 1 nicht beeinträchtigen. Solche Störfälle können jedoch Ursache für spätere schwerwiegende Ausfälle des Automaten 1 sein. Die Bedienungsperson kann über die Tastatur 10 veranlassen, daß Daten über eine bestimmte Anzahl der zuletzt registrierten Störfälle auf der Servicekarte 9 gespeichert werden. Mittels einer Druckvorrichtung 13, die entweder von der Bedienungsperson mitgeführt wird oder sich stationär in einer Werkstatt oder dergleicher befindet, können diese Daten ausgedruckt werden. Dadurch erhält man einen brauchbaren Hinweis auf etwaige Schwachstellen im Automaten, so daß es möglich ist, diese zu beseitigen und das Auftreten von Fehlern zu reduzieren.

Die Servicekarte 9 erlaubt es weiterhin, über die Tastaturen 10 und 11 verschiedene Einstellungen im Automaten 1 vorzunehmen, beispielsweise über die Tastatur 11 hinsichtlich des Datums und der Zeit und über die Tastatur 10 hinsichtlich des geltenden Tarifs oder der Stellung eines für die Herstellung der Briefmarken oder Fahrkarten verwendeten Druckwerks.

## Patentansprüche

1. Verfahren zum Betrieb eines gegen Abnahme von Geld oder geldgleichen Werten Leistungen erbringenden oder Gegenstände ausgebenden Automaten (1) mit einer einen Speicher enthaltenden elektronischen Steuereinheit und einer Schreib- und Lesevorrichtung, wobei der Automat durch unterschiedliche kartenförmige Aufzeichnungsträger (9) zur Ausgabe und/oder Anzeige von gegenwärtigen oder in der Vergangenheit aufgezeichneten Betriebszuständen entsprechenden Daten freigegeben oder unmittelbar veranlaßt wird, wobei im Automaten (1) eine Aufzeichnung außergewöhnlicher Betriebszustände erfolgt,
**dadurch gekennzeichnet,**
daß solche außergewöhnlichen Betriebszustände aufgezeichnet werden, die auf die bestimmungsgemäße Funktion des Automaten (1) keinen Einfluß hatten, und daß durch die Aufzeichnungsträger (9) direkt oder mittels einer internen Tastatur (10) die Ausgabe der Informationen über eine bestimmte Anzahl der zuletzt aufgezeichneten außergewöhnlichen Betriebszustände veranlaßt wird.

2. Verfahren nach Anspruch 1, dadurch gekennzeichnet, daß als Aufzeichnungsträger mit einem Mikroprozessor versehene Karten (Chip-Karten) (3,9) verwendet werden.

3. Verfahren nach Anspruch 1 oder 2, dadurch gekennzeichnet, daß ein Aufzeichnungsträger eine Berechtigung zur Betätigung der internen Tastastur (10) für die Eingabe von Daten in den Automaten (1) erteilt.

4. Verfahren nach Anspruch 3, dadurch gekennzeichnet, daß die eingegebenen Daten den Automaten (1) individualisierende und/oder den bestimmungssgemäßen Betrieb des Automaten (1) beeinflussende Daten darstellen.

5. Verfahren nach einem der Ansprüche 1 oder 2, dadurch gekennzeichnet, daß die auf einem Aufzeichnungsträger gespeicherten Daten den Automaten individualisierende und/oder den bestimmungsgemäßen Betrieb des Automaten beeinflussende Daten darstellen.

6. Verfahren nach Ansrpuch 3, dadurch gekennzeichnet, daß die eingegebenen Daten die Anzeige und/oder Ausgabe einzelner im bestimmungsgemäßen Betrieb des Automaten (1) durchgeführter Vorgänge betreffende Informationen bewirken.

7. Verfahren nach einem der Ansprüche 1 bis 6, dadurch gekennzeichnet, daß die Ausgabe der Informationen durch Übertragung auf den Aufzeichnungsträger erfolgt.

8. Verfahren nach einem der Ansprüche 1 bis 7, dadurch gekennzeichnet, daß über die interne Tastatur (10) die Ordnungsmäßigkeit der Funktionen der einzelnen Komponenten des Automaten geprüft wird.

9. Verfahren nach einem der Ansprüche 1 bis 8, dadurch gekennzeichnet, daß im Automaten (1) eine Anzeige über das Vorliegen und die Art eines außergewöhnlichen Betriebszustandes erfolgt.

10. Verfahren nach Anspruch 9, dadurch gekennzeichnet, daß die Anzeige des außergewöhnlichen Betriebszustandes durch über die interne Tastatur (10) eingegebene Daten veranlaßt wird.

11. Verfahren nach einem der Ansprüche 1 bis 10, dadurch gekennzeichnet, daß die auf einem Aufzeichnungsträger (3,9) gespeicherten Daten die Anzeige und/oder Ausgabe einzelner im bestimmungsgemäßen Betrieb des Automaten durchgeführter Vorgänge betreffende Informationen bewirken.

12. Verfahren nach einem der Ansprüche 1 bis 11, dadurch gekennzeichnet, daß im Automaten (1) ein das Geld oder geldgleiche Gegenstände aufnehmender Behälter (2) herausnehmbar installiert wird, daß die im bestimmungsgemäßen Betrieb durchgeführten Vorgänge auf einem Aufzeichnungsträger (3) aufgezeichnet werden, und daß der Behälter (2) und der Aufzeichnungsträger (3) am Ende eines Abrechnungsabschnitts zur gemeinsamen Auswertung herangezogen werden.

13. Verfahren nach Anspruch 12, dadurch gekennzeichnet, daß der Aufzeichnungsträger (3) zu Transportzwecken am Behälter (2) befestigt wird.

14. Verfahren nach Anspruch 12 oder 13, dadurch gekennzeichnet, daß der Aufzeichnungsträger (3) am Ende eines Abrechnungsabschnitts zur Übernahme der im bestimmungsgemäßen Betrieb durchgeführte Vorgänge betreffenden Informationen in den Automaten (1) eingeführt wird.

## Claims

1. Process for operating an automatic machine (1) which offers services or goods in return for money or money-like values, comprising an electronic control unit with memory and a write and read device, in which respect the automatic machine is enabled or directly commanded by different card-shaped data carriers (9) to dispense and/or display data relative to present or previously recorded operational conditions whilst extraordinary operating conditions are recorded in the automatic machine (1), **charac****terised in that** those extraordinary operating conditions which have no influence on the intended functions of the automatic machine (1) are recorded, and that the release of information regarding a specified number of the last recorded extraordinary operating conditions is initiated directly by the data carriers (9) or by means of an internal keyboard (10).

2. Process according to claim 1, **characterised in** **that** the data carriers are cards (chip cards)(3, 9) provided with a microprocessor.

3. Process according to claim 1 or 2, **characterised** **in that** a data carrier issues an authoritarian to operate the internal keyboard (10) for the purpose of entering data into the automatic machine (1).

4. Process according to claim 3, **characterised in** **that** the entered data represent data which individualise the automatic machine (1) and/or affect the intended operation of the automatic machine (1).

5. Process according to one of claims 1 or 2, **characterised in that** data stored on a data carrier represent data which individualise the automatic machine and/or affect the intended operation of the automatic machine.

6. Process according to claim 3, **charactersed in** **that** the entered data initiate the display or release of individual items of information relating to processes executed in the intended operation of the automatic machine (1).

7. Process according to one of claims 1 to 6, **characterised in that** the items of information are released by transferring them to the recording carrier.

8. Process according to one of claims 1 to 7, **characterised in that** the proper functioning of individual components of the automatic machine are checked via the internal keyboard (10).

9. Process according to one of claims 1 to 8, **characterised in that** the presence and the type of an extraordinary operating condition is indicated in the automatic machine (1).

10. Process according to claim 9, **characterised in** **that** the indication of an extraordinary operating condition is initiated by data which are entered via the internal keyboard (10).

11. Process according to one of claims 1 to 10, **characterised in that** the data stored on a recording carrier (3, 9) initiate the display and/or release of individual processes carried out during the intended operation of the automatic machine.

12. Process according to one of claims 1 to 11, **characterised in that** a receptacle (2) for money or money-like items is removably installed in the automatic machine (1), that procedures carried out during intended operation are recorded on a recording carrier (3), and that the container (2) and the recording carrier (3) are used for combined evaluation at the end of an accounting period.

13. Process according to claim 12, **characterised in** **that** the recording carrier (3) is mounted on the container to facilitate transportation.

14. Process according to claim 12 or 13, **character****ised in that** the recording carrier (3) is at the end of an accounting period inserted into the automatic machine (1) for collecting information related to processes carried out in intended operations.

## Revendications

1. Procédé d'exploitation d'un appareil automatique (1) qui fournit des prestations ou délivre des objets contre un retrait d'argent ou de valeurs semblables et qui comprend une unité de commande électronique, contenant une mémoire, et un dispositif d'écriture et de lecture, dans lequel l'appareil automatique est débloqué, ou directement contraint, par différents supports d'enregistrement (9) en forme de carte pour délivrer et/ou afficher des données correspondant à des états de fonctionnement du moment ou enregistrés dans le passé, un enregistrement d'états de fonctionnement anormaux ayant lieu dans l'appareil automatique, caractérisé en ce que sont enregistrés des états de fonctionnement anormaux qui n'ont eu aucune influence sur l'activité, selon sa destination, de l'appareil automatique et en ce que par les supports d'enregistrement (9), directement ou au moyen d'un clavier interne (10), la délivrance des informations est provoquée au-delà d'un nombre déterminé des états de fonctionnement anormaux enregistrés à la fin.

2. Procédé suivant la revendication 1, caractérisé en ce que sont utilisées des cartes (cartes à puce) (3, 9) équipées d'un microprocesseur.

3. Procédé suivant la revendication 1 ou 2, caractérisé en ce qu'un support d'enregistrement donne une autorisation pour l'actionnement du clavier interne (10), pour l'introduction de données dans l'appareil automatique (1).

4. Procédé suivant la revendication 3, caractérisé en ce que les données introduites représentent des données qui particularisent l'appareil automatique (1) et/ou qui influencent le fonctionnement, selon sa destination, de l'appareil automatique (1).

5. Procédé suivant l'une des revendications 1 et 2, caractérisé en ce que les données mémorisées sur un support d'enregistrement représentent des données qui particularisent l'appareil automatique et/ou qui influencent le fonctionnement, suivant sa destination, de l'appareil automatique.

6. Procédé suivant la revendication 3, caractérisé en ce que les données introduites provoquent l'affichage et/ou la délivrance d'informations séparées concernant des processus exécutés pendant le fonctionnement, selon sa destination, de l'appareil automatique (1).

7. Procédé suivant l'une quelconque des revendications 1 à 6, caractérisé en ce que la délivrance des informations a lieu par transfert sur le support d'enregistrement.

8. Procédé suivant l'une quelconque des revendications 1 à 7, caractérisé en ce que la régularité des activités des composants séparés de l'appareil automatique est testée par l'intermédiaire du clavier interne (10).

9. Procédé suivant l'une quelconque des revendications 1 à 8, caractérisé en ce que dans l'appareil automatique (1) a lieu un affichage au sujet du présent et du genre d'un état de fonctionnement anormal.

10. Procédé suivant la revendication 9, caractérisé en ce que l'affichage de l'état de fonctionnement anormal est provoqué par des données introduites par l'intermédiaire du clavier interne (10).

11. Procédé suivant l'une quelconque des revendications 1 à 10, caractérisé en ce que les données mémorisées sur un support d'enregistrement (3, 9) provoquent l'affichage et/ou la délivrance d'informations séparées concernant des processus exécutés dans le fonctionnement, selon sa destination, de l'appareil automatique.

12. Procédé suivant l'une quelconque des revendications 1 à 11, caractérisé en ce qu'un récipient (2) qui reçoit de l'argent ou des objets semblables à de l'argent est installé dans l'appareil automatique (1) de façon à pouvoir être retiré, en ce que les processus exécutés dans le fonctionnement selon la destination sont enregistrés sur un support d'enregistrement (3) et en ce que le récipient (2) et le support d'enregistrement (3) sont retirés pour l'évaluation commune, à la fin d'une tranche de décompte.

13. Procédé suivant la revendication 12, caractérisé en ce que le support d'enregistrement (3) est fixé au récipient (2) à des fins de transport.

14. Procédé suivant la revendication 12 ou 13, caractérisé en ce que le support d'enregistrement (3) est introduit dans l'appareil automatique (1) à la fin d'une tranche de décompte pour la prise en charge des informations concernant des processus exécutés dans le fonctionnement suivant la destination.
